# EUROPÄISCHE PATENTSCHRIFT

(11) **EP 3 568 258 B1**
(45) Veröffentlichungstag und Bekanntmachung des Hinweises auf die Patenterteilung: **21.04.2021**
(21) Anmeldenummer: 18700333.0
(22) Anmeldetag: 10.01.2018
(51) Int. Cl.: B23K 26/00, B23K 26/342, B23K 101/06, B23K 101/24, B23K 101/28

(54) **VERFAHREN ZUM VERKLEINERN ODER VOLLSTÄNDIGEN VERSCHLIESSEN EINER ÖFFNUNG EINER WERKSTÜCKINNENKONTUR MITTELS EINES DURCH EINE LASER-AUFTRAGSCHWEISS-VORRICHTUNG AUFGESCHMOLZENEN MATERIALS**
METHOD FOR REDUCING OR COMPLETELY CLOSING AN OPENING OF AN INNER CONTOUR OF A WORKPIECE BY MEANS OF A MATERIAL MELTED BY A LASER DEPOSITION WELDING DEVICE
PROCÉDÉ DE RÉDUCTION OU DE FERMETURE TOTALE D'UNE OUVERTURE D'UN CONTOUR INTÉRIEUR D'UNE PIÈCE À USINER AU MOYEN D'UNE MATIÈRE FONDUE PAR UN DISPOSITIF DE RECHARGEMENT LASER

(30) Priorität: 10.01.2017 DE 102017200233
(43) Veröffentlichungstag der Anmeldung: 20.11.2019
(73) Patentinhaber: Sauer GmbH, 55758 Stipshausen (DE)
(72) Erfinder: ALBERT, David, 87677 Stöttwang (DE)
(74) Vertreter: MERH-IP Matias Erny Reichl Hoffmann Patentanwälte PartG mbB
(86) Internationale Anmeldenummer: PCT/EP2018/050563
(87) Internationale Veröffentlichungsnummer: WO 2018/130571

(56) Entgegenhaltungen:
- EP-A1- 1 721 696
- EP-A1- 2 842 677
- WO-A1-2004/022266
- DE-A1-102004 043 746
- US-A1- 2007 203 584
- US-A1- 2016 074 937

## Beschreibung

Die vorliegende Erfindung betrifft ein Verfahren zum Verkleinern oder vollständigen Verschließen einer Öffnung einer Werkstückinnenkontur mittels eines durch eine Laser-Auftragschweiß-Vorrichtung aufgeschmolzenen Materials nach dem Oberbegriff des Anspruchs 1 (siehe WO2004/022266 A1), und ein Verfahren zum Auskragen einer Werkstückaußenkontur mittels eines durch eine Laser-Auftragschweiß-Vorrichtung aufgeschmolzenen Materials nach dem Oberbegriff des Anspruchs 2 (siehe US 2016/074937 A1).

### HINTERGRUND DER ERFINDUNG

Im Bereich der Additiven Fertigung einzelner Schichten bis hin zur Erzeugung von 3D-Strukturen wird unter anderem das Laser-Pulver-Auftragschweißen genutzt, was zu den Fertigungsverfahren des Auftragschweißens (oder auch Cladding genannt) gehört. Dabei erfolgt unter Anwendung von lokaler Hitzeeinwirkung ein Aufschmelzen der Werkstückoberfläche bei gleichzeitigem Aufbringen eines nahezu beliebigen metallischen Werkstoffs in Pulverform. Als Wärmequelle wird heutzutage ein leistungsstarker DiodenLaser oder Faserlaser vorrangig genutzt.

Eine besondere Problematik stellt bei dem Auftragschweißen das Ausbilden von überhängenden bzw. freitragenden Strukturen dar, insbesondere in Fällen, bei denen das Verwenden einer Hilfsstruktur, auf der das metallische Material aufgeschweißt und diese später entfernt werden kann, nicht möglich ist.

Hierfür wird in den meisten Fällen versucht, die Kontur eines Bauteils so zu gestalten, dass es während des Auftragschweiß-Prozesses um mehrere Raumrichtungen herum bewegt werden kann, sodass zu starke Überhänge beim Auftragen von Material vermieden werden können. Doch dieser Vorgehensweise sind schnell Grenzen gesetzt, wenn z.B. durch das Bewegen des Bauteils während des Prozesses eine Kollisionsgefahr des Bauteils mit der Laser-Auftragschweiß-Vorrichtung besteht.

Wird dennoch versucht, stärkere Überhänge auszubilden, so eignen sich die bis dato bekannten Laser-Auftragschweiß-Verfahren nur bedingt, da bei den bekannten Verfahren das aufgeschmolzene Material von der Stelle, an der das Material aufgebracht werden soll, verläuft bzw. abtropft. Dies führt zu Fertigungsergebnissen mit geringer Qualität bzw. zu einer hohen Ausschussrate der so gefertigten Teile, sodass diese Verfahren aus technologischer und wirtschaftlicher Sicht für diese Aufgaben ungeeignet sind.

Aus der Druckschrift WO2004/022266 A1 ist ein Verfahren bekannt um in einer Öffnung eine Haltesicherung einzubringen, so dass Material in die Öffnung oberhalb der Haltesicherung eingebracht werden kann, wodurch sich ein Verschluss bildet.

Aus der Druckschrift EP 2 842 677 A1 ist ein Verfahren zur kontrollierten Ablagerung eines Beschichtungswulstes, mittels eines Laserstrahlemitter und mit einer Düse zum Emittieren eines Flusses von Metallpulvern, auf der Umfangsfläche des rohrförmigen Trägerkörpers und anschließend die Bildung eines Gewindes mit Materialüberschuss in Bezug auf das Profil des Gewindes.

Aus der Druckschrift US 2016/074937 A1 ist ein Verfahren zur Herstellung von einem Material, Voxel für Voxel, unter Verwendung einer Abscheidung mit gerichteter Energie bekannt. Unter Verwendung der Methode werden nicht unterstützte Strukturen mit steilen Überhängen durch voxelweise Abscheidung gerichteter Energie beschrieben und demonstriert.

Aus der Druckschrift US 2007/203584 A1 ist eine Vorrichtung zur Herstellung von Knochengewebe bekannt, die ein Verbundelement/ Material auf Metall- oder Metallbasis mit einer inneren porösen Struktur umfasst.

### ZUSAMMENFASSUNG DER ERFINDUNG

Eine Aufgabe der vorliegenden Erfindung ist es daher, ein Verfahren zum Verkleinern oder vollständigen Verschließen einer Öffnung einer Werkstückinnenkontur mittels eines durch eine Laser-Auftragschweiß-Vorrichtung aufgeschmolzenen Materials bereitzustellen, mit dem die obigen Probleme vermieden werden.

Des Weiteren ist es Aufgabe der vorliegenden Erfindung, ein Verfahren zum Auskragen einer Werkstückaußenkontur mittels eines durch eine Laser-Auftragschweiß-Vorrichtung aufgeschmolzenen Materials bereitzustellen, mit dem die obigen Probleme ferner vermieden werden.

Diese Aufgaben werden gelöst durch ein Verfahren nach Anspruch 1 bzw. durch ein Verfahren nach Anspruch 2. Die abhängigen Ansprüche beziehen sich jeweils auf vorteilhafte Ausführungsbeispiele der erfindungsgemäßen Verfahren.

Das erfindungsgemäßes Verfahren zum Verkleinern oder vollständigen Verschließen einer Öffnung einer Werkstückinnenkontur mittels eines durch eine Laser-Auftragschweiß-Vorrichtung aufgeschmolzenen Materials, weist die folgenden Schritte auf: Bereitstellen eines Werkstücks mit einer Innenkontur, die eine Öffnung aufweist, die durch einen Randabschnitt begrenzt wird, Ausbilden einer Mehrzahl an Grundstegen aus aufgeschmolzenem Material mittels Laser-Auftragschweißen beginnend an dem Randabschnitt der Werkstückinnenkontur, derart, dass die ausgebildeten Grundstege unter einem vorbestimmten Winkel von dem Randabschnitt abstehen, Verbinden von benachbarten Grundstegen durch Ausbilden von Verbindungsstegen aus aufgeschmolzenem Material mittels Laser-Auftragschweißen, derart, dass eine aus Grundstegen und Verbindungsstegen bestehende Tragstruktur ausgebildet wird, Ausbilden einer mit der Tragstruktur verbundenen Abdeckschicht aus aufgeschmolzenem Material, derart, dass die Öffnung der Innenkontur verkleinert oder vollständig verschlossen wird.

Durch das Aufbauen der Tragstruktur ist es möglich, selbst großflächige Öffnungsbereiche mittels des Laser-Auftragschweiß-Verfahrens zu verschließen. Der schrittweise Aufbau der Tragstruktur ermöglicht es, eine freitragende/überhängende Struktur Schritt für Schritt aufzubauen, mittels derer im Anschluss entweder eine Öffnung verschlossen werden oder die dazu verwendet werden kann, eine zusätzliche Schicht aus aufgeschmolzenem Material auf die Tragstruktur aufzubringen und dadurch die Öffnung zu verschließen.

Der schrittweise Aufbau der Tragstruktur erfolgt durch das Auftragen einzelner aufgeschmolzener Materialpunkte, die jeweils nach ihrem Auftrag auf eine bereits bestehende Struktur (Werkstück oder bereits aufgetragenes Material) gekühlt werden. Dieses schnelle Herabkühlen des noch flüssigen Metalls führt zum vergleichsweise zügigen Erstarren des soeben aufgetragenen Materials. Somit kann die Form des soeben aufgetragenen Materials annähernd gehalten werden, sodass eine vergleichsweise präzise Formgestaltung ermöglicht wird.

Zum Kühlen der aufgeschmolzenen Materialpunkte wird vorzugsweise weiteres Metallpulver auf die Materialschmelze geleitet, wobei sich dieses mit der Schmelze verbindet und eine Oberschicht bildet. Diese Oberschicht kann später vorteilhaft dazu verwendet werden, weiteres aufgeschmolzenes Material aufzubringen, wobei sich das verflüssigte Material besonders schnell und wirkungsvoll mit der Oberschicht verbindet. Zusätzlich wird die Materialschmelze durch das Transportgas des Metallpulvers gekühlt, das zwangsweise als Transportmedium des Materials zusammen mit dem aufzuschmelzenden Material auf eine zu bearbeitende Stelle geleitet wird.

In ersten Tests dieses Verfahrens konnten die Erfinder überraschenderweise feststellen, dass teilweise erhebliche Längen von freitragenden Elementen wie z.B. den Grundstegen erzeugt werden können. Dabei konnten Längen von bis zu ein paar Zentimetern erreicht werden, ohne dass die Stege sich zu sehr verformten (z.B. aufgrund der Schwerkraft, etc.) und ohne dass dabei eine Hilfsstruktur verwendet werden musste.

Auf Basis dessen können teils großflächige Öffnungen verschlossen und der Materialeinsatz in einem überschaubaren Maß gehalten werden. Ferner waren deutlich geringere Nacharbeiten an der aufgetragenen Schicht nötig, wodurch die Maschinenzeiten bei einer späteren seriellen Verwendung dieses Verfahrens reduziert werden können.

Das erfindungsgemäße Verfahren zum Auskragen einer Werkstückaußenkontur mittels eines durch eine Laser-Auftragschweiß-Vorrichtung aufgeschmolzenen Materials, weist die folgenden Schritte auf: Bereitstellen eines Werkstücks mit einer Außenkontur, die durch einen Randabschnitt begrenzt wird, Ausbilden einer Mehrzahl an Grundstegen aus aufgeschmolzenem Material mittels Laser-Auftragschweißen beginnend an dem Randabschnitt der Werkstückaußenkontur, derart, dass die ausgebildeten Grundstege unter einem vorbestimmten Winkel von dem Randabschnitt abstehen, Verbinden von benachbarten Grundstegen durch Ausbilden von Verbindungsstegen aus aufgeschmolzenem Material mittels Laser-Auftragschweißen, derart, dass eine aus Grundstegen und Verbindungsstegen bestehende Tragstruktur ausgebildet wird, Ausbilden einer mit der Tragstruktur verbundenen Kragschicht aus aufgeschmolzenem Material, derart, dass die Außenkontur des Werkstücks ausgekragt wird.

Wie bereits bei dem Verfahren zum Verkleinern oder vollständigen Verschließen einer Öffnung einer Werkstückinnenkontur werden auch hier bei der Ausbildung einer Kragschicht die bereits genannten Vorteile erzielt. Zusätzlich ist es natürlich vorteilhaft, dass auch nur Teilbereiche einer Außen- bzw. Innenkontur mit diesem Verfahren weiter ausgebildet werden können.

Dies ist dann besonders von Vorteil, wenn kleinere (Teil-)Auskragungen auf ein bestehendes Werkstück zeitlich und wirtschaftlich optimiert aufgetragen werden können, anstatt durch subtraktive Fertigungsverfahren wie z.B. Fräsbearbeitung deutlich größere Grundkörper zu zerspanen, damit das zu fertigende Bauteil einen vorstehenden Abschnitt aufweist.

Weiterhin können durch diese Verfahren gezielt an bereits bestehenden Bauteilen frei gestaltbare Abschnitte durch Aufschweißen hinzugefügt werden, wodurch relativ komplexe Bauformen bei gleichzeitig angemessenem Materialeinsatz und Fertigungszeit möglich sind.

Eine vorteilhafte Weiterbildung der erfindungsgemäßen Verfahren besteht darin, dass die Abdeckschicht oder Kragschicht durch Ausfüllen von Freiräumen der Tragstruktur mit aufgeschmolzenem Material ausgebildet wird.

Dies ermöglicht, dass die Tragstruktur selbst als Abdeckschicht oder Kragschicht weiter ausgebildet werden kann. Die Freiräume der Tragstruktur, die vorrangig gitterförmig aufgebaut ist, können dadurch mit weiterem aufgeschmolzenem Material ausgefüllt werden.

Eine vorteilhafte Weiterbildung der erfindungsgemäßen Verfahren besteht darin, dass die Abdeckschicht oder Kragschicht durch Aufbringen einer zusätzlichen Schicht aus aufgeschmolzenem Material auf die Tragstruktur ausgebildet wird.

Ferner kann die Tragstruktur als eine Hilfsstruktur verwendet werden, auf dieser dann eine zusätzliche Schicht aus aufgeschmolzenem Material aufgetragen wird. Dies ist dann besonders von Vorteil, wenn großflächige Bereiche überspannt oder ausgekragt werden müssen, und die Tragschicht als eine Art Unterbau für zusätzliche Stabilität sorgt. Hierfür eignet sich die gitterförmige Struktur der Tragstruktur besonders vorteilhaft, da diese eine Kombination aus hoher Stabilität mit vergleichsweise geringem Eigengewicht ermöglicht.

Eine besonders vorteilhafte Weiterbildung der erfindungsgemäßen Verfahren liegt darin, dass die Grundstege und/oder die Verbindungsstege der Tragstruktur durch punktweises Auftragen von aufgeschmolzenem Material entsprechend der folgenden Schritte ausgebildet werden: Zuführen des aufzuschmelzenden Materials mittels einer Materialzufuhreinrichtung an eine vorbestimmte Stelle des Werkstücks oder an eine vorbestimmte Stelle des bereits aufgetragenen Materials, Einschalten und Leiten eines Laserstrahls der Laser-Auftragschweiß-Vorrichtung an die vorbestimmte Stelle, sodass das aufzuschmelzende Material durch den Laserstrahl an der vorbestimmten Stelle aufgeschmolzen und aufgetragen wird, Abschalten des Laserstrahls nach Überschreiten einer vorbestimmten Laserzeit, Weiteres Zuführen von aufzuschmelzendem Material an die vorbestimmte Stelle über die Dauer einer vorbestimmten Abkühlzeit.

Ein besonders vorteilhaftes Verfahren zur Ausbildung der Tragstruktur liegt in dem punktweisen Aufbau der Grund- und Verbindungsstege. Hierbei werden einzelne Materialpunkte aufgeschmolzen und auf eine bestehende Struktur aufgebracht, um die Materialschmelze im Anschluss daran mittels weiteren Metallpulvers und/oder des Transportgases des Metallpulvers zu kühlen und sie somit in ihrer Form wie auch örtlich zu festigen.

Dies ermöglicht, die Tragstruktur während ihres Aufbaus relativ präzise in ihrer Lage zu sichern und in ihrer Form so auszugestalten, wie es die Anwendung erfordert. Dabei kann eine Verformung der erzeugten Struktur aufgrund dessen, dass die Materialpunkte beim Auftrag einen flüssigen Zustand haben und diese naturgemäß die Tendenz haben, sich in Richtung der wirkenden Schwerkraft zu verlagern, weitestgehend unterbunden werden.

Eine vorteilhafte Weiterbildung der erfindungsgemäßen Verfahren besteht darin, dass eine Mehrzahl der Grundstege und eine Mehrzahl der Verbindungsstege so angeordnet sind, dass die Verbindungsstege jeweils die benachbarten Grundstege miteinander verbinden und dass die Grundstege und die Verbindungsstege zusammen eine gitterförmige Struktur ausbilden.

Dabei sind die Verfahren nicht auf zylindrische Werkstücke oder im Allgemeinen auf umschlossene Strukturen beschränkt. Vielmehr können die erfindungsgemäßen Verfahren dadurch vorteilhaft weitergebildet werden, dass die Grundstege zum Verkleinern oder zum vollständigen Verschließen einer grabenförmigen oder längsseitigen Öffnung der Werkstückinnenkontur so angeordnet sind, dass diese sich von dem Randabschnitt im Wesentlichen in Breitenrichtung der grabenförmigen oder längsseitigen Öffnung erstrecken, und die Verbindungsstege so aneinander gereiht angeordnet sind, dass die Verbindungsstege im Wesentlichen parallel zum Randabschnitt der grabenförmigen oder längsseitigen Öffnung angeordnet sind.

Dadurch ist es möglich, längsseitige Öffnungen (z.B. eine Längsseite eines Kühlkanals) mit einer Tragstruktur vollständig oder teilweise zu überspannen, die im Nachhinein entweder als Abdeckschicht weitergebildet werden kann, oder auf dieser eine separate Abdeckschicht aufgetragen werden kann, um die längsseitige Öffnung zu Verkleinern oder vollständig zu Verschließen.

Ferner können die erfindungsgemäßen Verfahren dadurch vorteilhaft weitergebildet werden, dass die Grundstege und Verbindungsstege zusammen eine spinnennetzförmige Struktur, eine schachbrettförmige Struktur oder eine wabenförmige Struktur bilden.

Die Tragstruktur bildet in den meisten Fällen die Ausgangslage, auf der weiter aufgebaut werden kann. Dabei ist es, je nach Anwendungsfall, sinnvoll, verschiedene Gitterformen zu verwenden, um die Tragstruktur entsprechend der Anwendung zu gestalten. Das Ausbilden von spinnennetzförmigen, schachbrettförmigen oder wabenförmigen Strukturen bildet dabei nur eine beispielhafte Auswahl von möglichen Strukturen. Dabei ist das Verfahren in keinster Weise auf die beschriebenen bzw. genannten Formen beschränkt, sondern kann vielmehr darüber hinaus auch aus völligfrei gestalteten Formen und Vernetzungen wie auch aus Kombinationen bekannter Strukturmuster aufgebaut sein.

Zudem können die erfindungsgemäßen Verfahren dadurch vorteilhaft weitergebildet werden, dass der Laserstrahl einen Durchmesser von 1 mm bis 5 mm, bevorzugt von 2 mm bis 4 mm und besonders bevorzugt von 2,5 mm bis 3,5 mm aufweist.

Die erfindungsgemäßen Verfahren können darüber hinaus dadurch vorteilhaft weitergebildet werden, dass die Laserzeit zwischen 0,2 und 2 Sekunden, bevorzugt zwischen 0,5 und 1,5 Sekunden, und besonders bevorzugt 1 Sekunde beträgt.

Hierdurch können die aufgebrachten Strukturen des aufgeschmolzenen Materials teils relativ dünn und filigran, teils aber auch mit dickerer Materialstärke aufgebaut werden. Dies kann in den meisten Fällen in einem Durchgang stattfinden, sodass auch hier wieder Fertigungszeit und -energie eingespart werden kann.

Eine vorteilhafte Weiterbildung der erfindungsgemäßen Verfahren besteht darin, dass bei dem Ausbilden von Grundstegen und/oder Verbindungsstegen der Tragstruktur die Materialzufuhreinrichtung und der Laserstrahl nach einem punktweisen Auftragen von aufgeschmolzenem Material an der vorbestimmten Stelle jeweils um 0,5 mm bis 1,8 mm, bevorzugt um 0,8 mm bis 1,5 mm und besonders bevorzugt um 1 mm bis 1,2 mm an die andere vorbestimmte Stelle des aufgetragenen Materials versetzt werden, um weiteres Material für den jeweiligen Grundsteg und/oder Verbindungssteg der Tragstruktur punktweise aufzutragen.

Somit ist es möglich, je nach Menge des aufgebrachten Materials und Laserpunktdurchmesser in kleineren, wie auch in größeren Schritten Grund- und Verbindungsstege auszubilden. Hierdurch kann die Tragstruktur, wie aber auch jede andere Struktur, präziser und/oder in deutlich kürzerer Zeit ausgeführt werden.

Ferner können die erfindungsgemäßen Verfahren dadurch vorteilhaft weitergebildet werden, dass die Abkühlzeit zwischen 1 und 10 Sekunden, bevorzugt zwischen 3 und 8 Sekunden, und besonders bevorzugt zwischen 4 und 6 Sekunden beträgt.

Auch hier können die Parameter des Abkühlvorgangs, entsprechend also die der Abkühlzeit, an den jeweiligen Anwendungsfall angepasst werden. Hierdurch können je nach Anforderung unterschiedliche Genauigkeiten und Fertigungsgeschwindigkeiten erreicht werden bzw. die Oberflächenstruktur des aufgebrachten Materials beeinflusst werden.

Eine vorteilhafte Weiterbildung der erfindungsgemäßen Verfahren besteht darin, dass die Materialzufuhreinrichtung dazu eingerichtet ist, das aufzuschmelzende Material über eine Düse fokussierend an die vorbestimmten Stellen zu führen.

Um das verwendete Metallpulver optimal nutzen zu können empfiehlt es sich, dieses mittels einer Düse auf die Stelle zu leiten, auf der das Metallpulver aufgeschmolzen und aufgetragen werden soll. Ferner kann mittels einer Fokussierung des Metallpulvers durch die Düse eine genauere Ausbildung einzelner Abschnitte (wie z.B. Grund- und Verbindungsstege) gewährleistet werden. Ferner können hierdurch Ressourcen geschont werden.

Das erfindungsgemäße Verfahren kann dadurch vorteilhaft weitergebildet werden, dass die Düse dazu eingerichtet ist, in einen beliebigen Winkel zu einer Flächennormalen einer zu bearbeitenden Werkstückoberfläche, vorzugsweise zwischen -45° und +45° und besonders bevorzugt zwischen -25° und +25° angestellt zu werden.

Bei der Ausbildung einer Fläche durch das erfindungsgemäße Verfahren kann es teilweise notwendig sein, die Düse entsprechend der gegebenen Raumverhältnisse und des zur Verfügung stehenden Arbeitsraumes in verschiedenen Winkeln anzustellen. In den meisten Fällen wird die Düse senkrecht zur Ausbildungsrichtung der aufzubringenden Fläche positioniert sein. Vorteilhafterweise kann nun, bei Gefahr einer Kollision zwischen Düse und dem Werkstück, der Winkel aus der Senkrechten heraus um einen beliebigen Winkel, vorzugsweise z.B. ±45° oder ±25°, angestellt werden, um eine mögliche Kollision zu vermeiden.

Durch die erfindungsgemäßen Verfahren können additive Fertigungstechniken wie z.B. das Laser-Pulver-Auftragschweißen dazu verwendet werden, Verschlüsse von Öffnungen und Auskragungen auszubilden, selbst wenn diese vergleichsweise großflächig auszuführen sind, ohne dabei auf eine Hilfsstruktur während der Ausbildung der Verschlüsse oder Auskragungen zurückgreifen zu müssen. Dabei können die Vorteile der additiven Fertigung (wie z.B. Ressourcenschonung, Wirtschaftlichkeit, etc.) genutzt werden und diese um einen entscheidenden Punkt erweitert werden, nämlich um die Möglichkeit, sehr frei Formen an Werkstücken zu gestalten und auszubilden, auch wenn es sich dabei um freitragende Formen handelt. Dies stellt eine im besonders hohen Maße vorteilhafte Weiterbildung der bisher bekannten Laser-Auftragschweiß-Verfahren dar und bietet dem Anwender ein deutlich breiteres Anwendungsspektrum dieser bekannten Technik bei der Fertigung von anwendungsspezifischen Bauteilen.

Weitere Aspekte und deren Vorteile als auch Vorteile und speziellere Ausführungsmöglichkeiten der vorstehend beschriebenen Aspekte und Merkmale werden aus den folgenden, jedoch in keiner Weise einschränkend aufzufassenden Beschreibungen und Erläuterungen zu den angehängten Figuren beschrieben.

### KURZBESCHREIBUNG DER FIGUREN

- Fig. 1: zeigt ein Ablaufdiagramm des erfindungsgemäßen Verfahrens zum Verkleinern oder vollständigen Verschließen einer Öffnung einer Werkstückinnenkontur
- Fig. 2a: zeigt schematisch den Querschnitt eines Werkstücks mit einer ausgebildeten Tragstruktur und einer zusätzlich aufgebrachten Abdeckschicht, die eine Öffnung des Werkstücks verschließen
- Fig. 2b: zeigt schematisch eine Ausführungsform der ausgebildeten Tragstruktur nach dem erfindungsgemäßen Verfahren zum Verkleinern oder vollständigen Verschließen einer Öffnung einer Werkstückinnenkontur
- Fig. 2c: zeigt schematisch eine Ausführungsform der ausgebildeten Tragstruktur nach dem erfindungsgemäßen Verfahren zum Verkleinern oder vollständigen Verschließen einer grabenförmigen oder längsseitigen Öffnung einer Werkstückinnenkontur
- Fig. 3: zeigt ein Ablaufdiagramm des erfindungsgemäßen Verfahrens zum Auskragen einer Werkstückaußenkontur
- Fig. 4a: zeigt schematisch den Querschnitt eines Werkstücks mit einer ausgebildeten Tragstruktur und einer zusätzlich aufgebrachten Kragschicht, die eine Außenkontur des Werkstücks auskragen
- Fig. 4b: zeigt schematisch eine Ausführungsform der ausgebildeten Tragstruktur nach dem erfindungsgemäßen Verfahren zum Auskragen einer Werkstück-außenkontur
- Fig. 5: zeigt ein Ablaufdiagramm eines erfindungsgemäßen Verfahrens für das punktweise Auftragen von aufgeschmolzenem Material zum Ausbilden der Tragstruktur
- Fig. 6: zeigt schematisch den Querschnitt eines Werkstücks und einer Tragstruktur mit einem Neigungswinkel der Tragstruktur gegenüber dem Randabschnitt und einem Anstellwinkel einer Düse einer Materialzufuhreinrichtung und des Laserstrahls

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebene Beispiele bzw. durch Kombination einzelner oder mehrerer der Merkmale der beschriebene Beispiele im Rahmen des Schutzumfanges der unabhängigen Ansprüche umfasst sind.

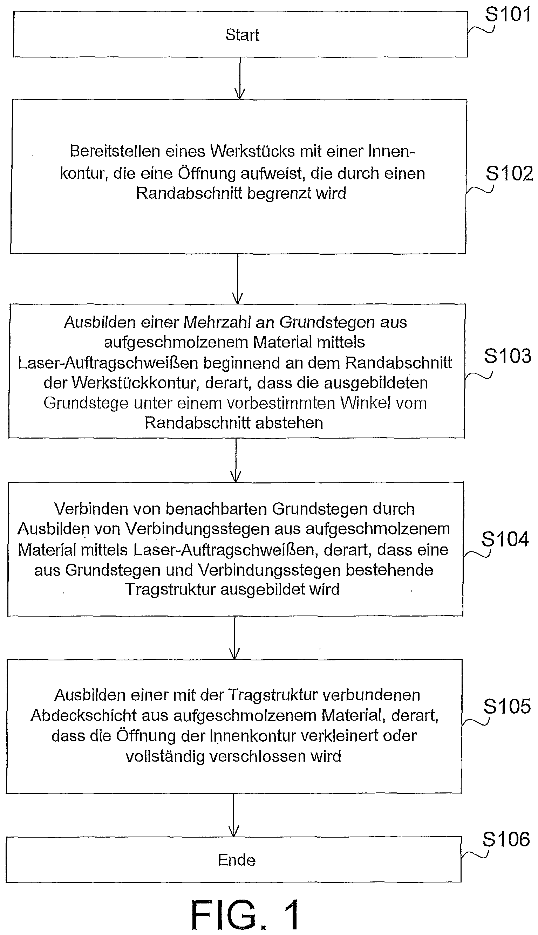

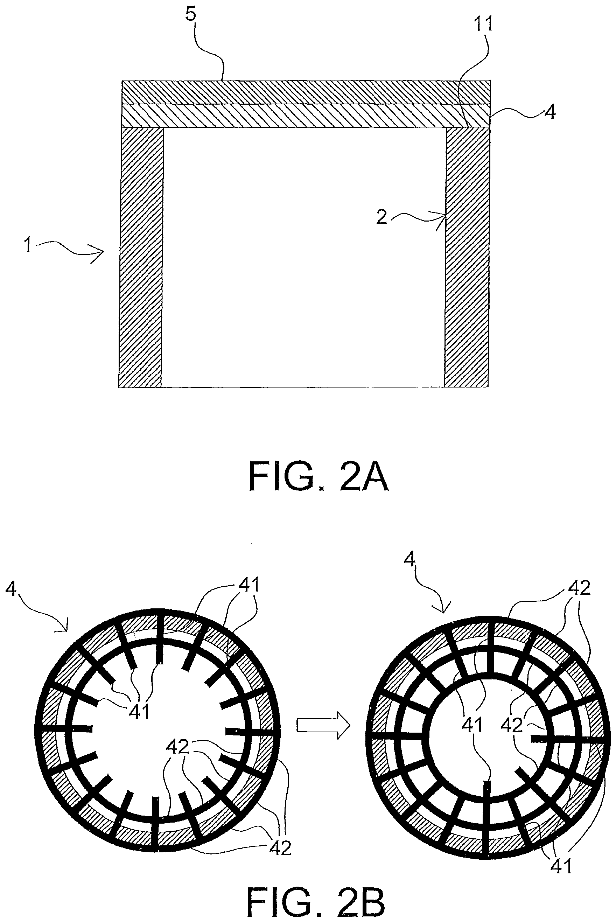

Fig. 1 zeigt ein Ablaufdiagramm des erfindungsgemäßen Verfahrens zum Verkleinern oder vollständigen Verschließen einer Öffnung einer Werkstückinnenkontur 2, wobei das Verfahren im Folgenden unter zusätzlicher Bezugnahme auf die Figuren 2a und 2b beschrieben wird.

Fig. 2a zeigt schematisch den Querschnitt eines Werkstücks 1 mit einer ausgebildeten Tragstruktur 4 und einer zusätzlich aufgebrachten Abdeckschicht 5, die eine Öffnung des Werkstücks 1 verschließen.

Fig. 2b zeigt schematisch eine Ausführungsform der ausgebildeten Tragstruktur 4 nach dem erfindungsgemäßen Verfahren zum Verkleinern oder vollständigen Verschließen einer Öffnung der Werkstückinnenkontur 2.

In Schritt S102 wird ein Werkstück 1 mit der Innenkontur 2 für das Anwenden des Verfahrens bereitgestellt. Ferner weist die Innenkontur 2 eine Öffnung auf, die durch das erfindungsgemäße Verfahren verkleinert oder gar vollständig verschlossen werden soll. Die Öffnung ist zudem durch einen Randabschnitt 11 begrenzt.

Im nächsten Schritt S103 wird eine Mehrzahl an Grundstegen 41 ausgebildet. Dies erfolgt, indem aufzuschmelzendes Material durch eine Laser-Auftragschweiß-Vorrichtung 7, im speziellen durch das Eintragen von aufzuschmelzendem Material durch eine Materialzufuhreinrichtung 8 und dem anschließenden Schmelzen mittels eines Laserstrahls 9, aufgeschmolzen und an dem Randabschnitt 11 beginnend aufgetragen wird. Dabei werden die Grundstege 41 derart ausgebildet, dass sie unter einem vorbestimmten Winkel von dem Randabschnitt 11 abstehen.

Der Winkel, mit dem die Grundstege 41 von dem Randabschnitt 11 abstehen, kann sich nach verschiedenen Ausgestaltungsformen der Tragstruktur 4 richten. So kann es zweckdienlich sein, statt einer Fläche zum Verschließen der Öffnung eine Dachkantenform zu wählen. Aber auch Krafteinleitung und -weiterleitung sowie die Ausgestaltung möglicher weiterer Materialaufträge können für die Ausgestaltung der Tragstruktur 4 von Bedeutung sein und entsprechend in einem abgeänderten Winkel der Grundstege 41, wie in der Fig. 2a gezeigt, Berücksichtigung finden.

Im darauf folgenden Schritt S104 werden die ausgebildeten Grundstege 41, im speziellen die benachbarten Grundstege 41, mittels sogenannter Verbindungsstege 42 verbunden, die wiederum auch durch die Laser-Auftragschweiß-Vorrichtung 7 ausgebildet werden. Die dabei entstehende Struktur ist in sich durch die Verbindung der Grundstege 41 mit den Verbindungsstegen 42 überaus stabil und kann daher als eine gitterförmige Tragstruktur 4 für das weitere Ausbilden eines Verschlusses oder Verengung der Öffnung der Werkstückinnenkontur 2 verwendet werden.

Im nächsten Schritt S105 wird nun eine Abdeckschicht 5 in Verbindung mit der Tragstruktur 4 durch zusätzliches, aufgeschmolzenes Material ausgebildet, derart, dass die Öffnung der Innenkontur 2 des Werkstücks 1 verkleinert bzw. vollständig verschlossen wird.

Vorteilhafterweise kann die Tragstruktur 4 bzw. der Verschluss der Öffnung der Werkstückinnenkontur 2 nun dazu verwendet werden, weitere Strukturen auf dem Werkstück mittels des Laser-Auftragschweiß-Verfahrens zu erzeugen.

Dabei weist das Werkstück 1 eine Innenkontur 2 auf, deren Öffnung mittels des erfindungsgemäßen Verfahrens vollständig verschlossen werden soll. Dazu wird mit dem erfindungsgemäßen Verfahren eine Tragstruktur 4 ausgebildet, die mit einem Randabschnitt 11 der Innenkontur 2 stoffschlüssig verbunden wird und die die Öffnung vollständig überspannt. Diese Tragstruktur 4 ermöglicht das Aufbringen einer weiteren Schicht, der Abdeckschicht 5, mittels dieser die Öffnungder Innenkontur 2 nun vollständig verschlossen wird.

Es ist dabei aber auch möglich, anstatt der extra aufgebrachten Abdeckschicht 5 die Freiräume der Tragstruktur 4 mit weiterem, aufgeschmolzenem Material auszufüllen. Dazu ist es vorteilhaft, die Tragstruktur 4, die eine gitterförmige Struktur aufweist, mit einer vergleichsweise feinmaschigen Gitterstruktur zu versehen, damit die zum Zeitpunkt des Auftragens flüssigen, metallischen Materialien an der bereits vorhandenen Tragstruktur 4 z.B. einer möglichst großen Adhäsionskraft ausgesetzt sind und daher an der Tragstruktur 4 haften bleiben.

In beiden Fällen kann durch das Ausbilden der Tragstruktur 4 mittels des erfindungsgemäßen Verfahrens die Öffnung verschlossen bzw. das Verschließen der Öffnung unterstützt werden.

Bei der gezeigten Tragstruktur 4 werden die Grundstege 41 so angeordnet, dass sich ihre Längsrichtungen im Wesentlichen in einem gedachten Schnittpunkt im Zentrum des Werkstücks 1 (bei einer Draufsicht auf das Werkstück 1) treffen. Mehrere Verbindungsstege 42 werden (hier in dem gezeigten Beispiel zu polygonalen Verbindungsstegreihen) aneinander gereiht und diese Verbindungsstegreihen konzentrisch um den gedachten Schnittpunkt der Grundstege 41 angeordnet. Die so entstandene, beispielhafte Struktur gleicht vom Muster her dem eines Spinnennetzes.

In der Fig. 2b ist veranschaulicht, wie schrittweise die Tragstruktur 4, die z.B. für das Verschließen der Öffnung der Werkstückinnenkontur 2 verwendet werden kann, ausgebildet wird. Dabei wird an dem Randabschnitt 11 des Werkstücks, der die Öffnung der Innenkontur 2 begrenzt, begonnen, Material aufzutragen.

Ausgehend von dem Randabschnitt 11 wird nun beispielhaft erst eine vorbestimmte Anzahl an Grundstegen 41 ausgebildet, die mit ausgebildeten Verbindungsstegen 42 verbunden werden, um der "wachsenden" Tragstruktur 4 immer mehr Stabilität zu geben. Dies ist besonders für die Grundstege 41 entscheidend, die bis dato lediglich mit einem Ende stoffschlüssig mit der bereits vorhandenen Tragstruktur 4 bzw. mit dem Randabschnitt 11 verbunden sind.

In der rechten Darstellung der Fig. 2b sieht man eine bereits deutlich "gewachsene" Tragstruktur 4. Diese könnte z.B. bereits für das Verkleinern/Verengen der Öffnung der Werkstückinnenkontur 2 verwendet werden.

Die in Figuren 2a und 2b gezeigte Tragstruktur 4 ist nicht auf die gezeigte bzw. beschriebene Struktur beschränkt. Vielmehr können verschieden ausgeformte Strukturen wie z.B. eine spinnennetzförmige, eine schachbrettförmige oder eine wabenförmige Struktur ausgebildet werden. Es können aber auch Kombinationen von Strukturen verwendet werden, wenn dies dem Anwendungszweck dienlich ist.

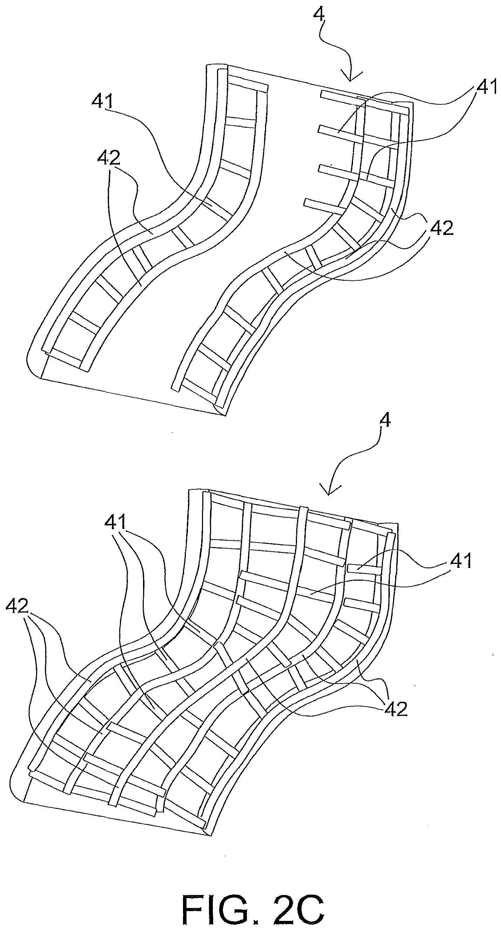

Fig. 2c zeigt schematisch eine Ausführungsform der ausgebildeten Tragstruktur 4 nach dem erfindungsgemäßen Verfahren zum Verkleinern (obere Darstellung) oder vollständigen Verschließen (untere Darstellung) einer grabenförmigen oder längsseitigen Öffnung einer Werkstückinnenkontur 2.

Dabei werden die Grundstege 41 derart angeordnet, dass sie von einem Randabschnitt 11 in Breitenrichtung einer z.B. grabenförmigen oder längsseitigen Öffnung ausgebildet werden. Die Verbindungsstege 42 werden entsprechend im Wesentlichen parallel zu dem Randabschnitt 11 ausgebildet, um eine dem Verlauf der grabenförmigen oder längsseitigen Öffnung entsprechend gestaltete Tragstruktur 4 auszubilden.

Diese Tragstruktur 4 kann nun entweder zu einer Abdeckschicht 5 weitergebildet werden oder es wird eine separate Abdeckschicht 5 auf ihr aufgetragen. Beides kann vorteilhaft dazu genutzt werden, die grabenförmige oder längsseitige Öffnung zu Verkleinern oder vollständig zu verschließen.

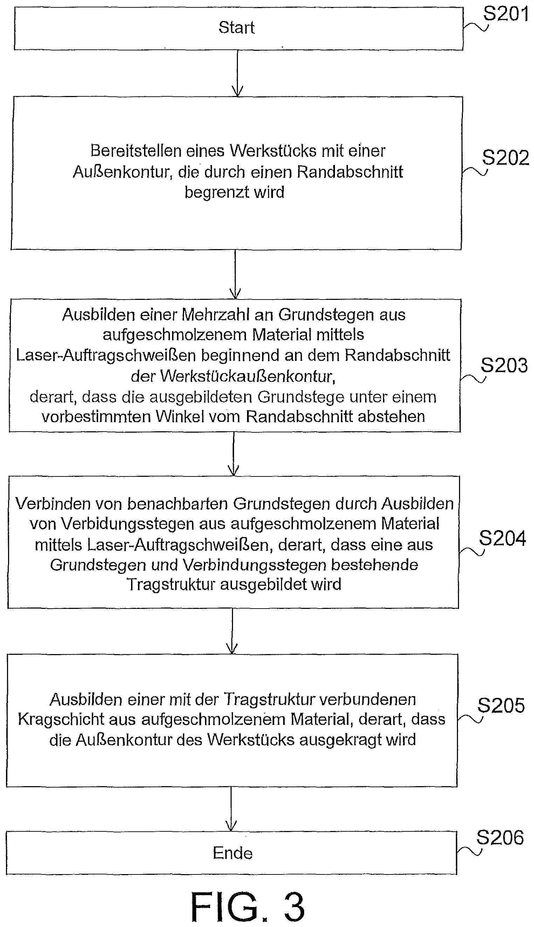

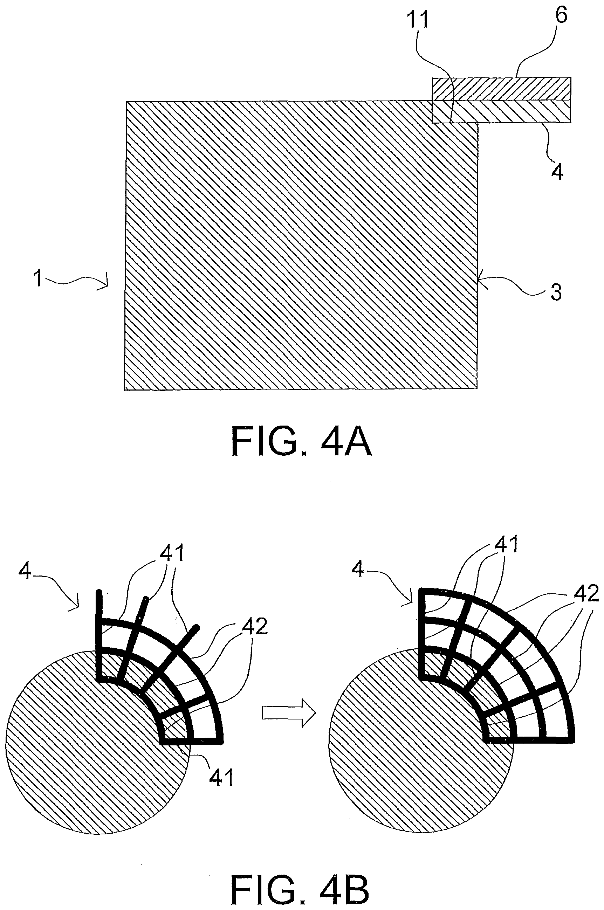

Fig. 3 zeigt ein Ablaufdiagramm des erfindungsgemäßen Verfahrens zum Auskragen einer Werkstückaußenkontur 3, wobei das Verfahren im Folgenden unter zusätzlicher Bezugnahme auf die Figuren 4a und 4b beschrieben wird.

Fig. 4a zeigt schematisch den Querschnitt eines Werkstücks 1 mit einer ausgebildeten Tragstruktur 4 und einer zusätzlich aufgebrachten Kragschicht 6, die eine Außenkontur 3 des Werkstücks 1 auskragen.

Fig. 4b zeigt schematisch eine Ausführungsform der ausgebildeten Tragstruktur 4 nach dem erfindungsgemäßen Verfahren zum Auskragen einer Werkstückaußenkontur 3.

In Schritt S202 wird ein Werkstück 1 mit der Außenkontur 3 für das Anwenden des Verfahrens bereitgestellt. Die Außenkontur 3 weist zudem einen Randabschnitt 11 auf, von diesem aus die Außenkontur 3 mit dem erfindungsgemäßen Verfahren ausgekragt werden soll.

Im nächsten Schritt S203 wird eine Mehrzahl an Grundstegen 41 ausgebildet. Dies erfolgt, indem aufzuschmelzendes Material wie bereits in Fig. 1 beschrieben durch eine Laser-Auftragschweiß-Vorrichtung 7 aufgeschmolzen und an dem Randabschnitt 11 beginnend aufgetragen wird. Dabei werden die Grundstege 41 derart ausgebildet, dass sie unter einem vorbestimmten Winkel von dem Randabschnitt 11 abstehen.

Im darauf folgenden Schritt S204 werden wieder die ausgebildeten, benachbarten Grundstege 41 mittels der Verbindungsstege 42 verbunden, die wiederum auch durch die Laser-Auftragschweiß-Vorrichtung 7 ausgebildet werden. Zusammen bilden sie die Tragstruktur 4. Diese ist bloß im Gegensatz zu der Tragstruktur 4, wie sie in Fig. 1 beschrieben ist, nicht von dem Randabschnitt 11 in Richtung einer Innenkontur ausgebildet, sondern in Richtung der Außenkontur 3 ausgebildet. Die dabei entstehende Struktur weißt dabei wieder die Eigenschaften auf, wie bereits in Fig. 1 beschrieben.

Im nächsten Schritt S205 wird nun eine Kragschicht 6 in Verbindung mit der Tragstruktur 4 durch zusätzliches, aufgeschmolzenes Material ausgebildet, derart, dass die Außenkontur 3 des Werkstücks 1 ausgekragt wird.

Vorteilhafterweise kann die Tragstruktur 4 bzw. die Auskragung der Werkstückaußenkontur 3 nun dazu verwendet werden, weitere Strukturen auf dem Werkstück mittels des Laser-Auftragschweiß-Verfahrens zu erzeugen.

Um eine unnötige Wiederholung von bereits genannten Eigenschaften zu vermeiden wird hiermit auf die Fig. 2a verwiesen, die die grundlegenden Merkmale des Ausbildens einer Tragstruktur 4 wiedergibt. Der Unterschied zu Fig. 2a liegt nun hierbei in einer Auskragung der Außenkontur 3 des Werkstücks 1, wobei diese Auskragung ferner nur ein Teil der Außenkontur 3 betrifft.

Dies kann ferner vorteilhaft sein, wenn komplexe, nicht symmetrische Bauteil-Geometrien erzeugt werden müssen, um das Bauteil für den jeweiligen Verwendungszweck anzupassen. Jedoch kann die Auskragung auch symmetrisch für die gesamte Außenkontur 3 des Werkstücks 1 erfolgen.

Das Ausbilden der Tragstruktur 4 mittels des erfindungsgemäßen Verfahrens ermöglicht die Auskragung der Außenkontur 3, in dem eine Basis geschaffen wird, die entweder selbst durch Verfüllen der Freiräume zu einer geschlossenen Schicht weiter ausgebildet werden kann, oder das Aufbringen einer zusätzlichen Schicht (hier Kragschicht 6) unterstützt.

Bei der gezeigten Auskragung werden die Grundstege 41, ähnlich wie in Fig. 2b gezeigt, so angeordnet, dass sich ihre Längsrichtungen im Wesentlichen in einem gedachten Schnittpunkt im Zentrum des Werkstücks 1 (bei einer Draufsicht auf das Werkstück 1) treffen. Jedoch ist die Tragstruktur 4, wie sie in Fig. 1 beschrieben ist, nicht von dem Randabschnitt 11 in Richtung einer Innenkontur ausgebildet, sondern in Richtung der Außenkontur 3 ausgebildet. Mehrere Verbindungsstege 42 werden aneinander gereiht und diese Verbindungsstegreihen konzentrisch um den gedachten Schnittpunkt der Grundstege 41 angeordnet.

Es sei aber noch einmal deutlich darauf hingewiesen, dass die Tragstruktur 4 nicht auf die gezeigte bzw. beschriebene Struktur beschränkt ist. Vielmehr können auch bei der Auskragung verschieden ausgeformte Strukturen wie z.B. eine spinnennetzförmige, oder eine schachbrettförmige, oder eine wabenförmige Struktur ausgebildet werden. Es können aber auch Kombinationen von Strukturen verwendet werden, wenn dies zum Beispiel dem Anwendungszweck dienlich ist.

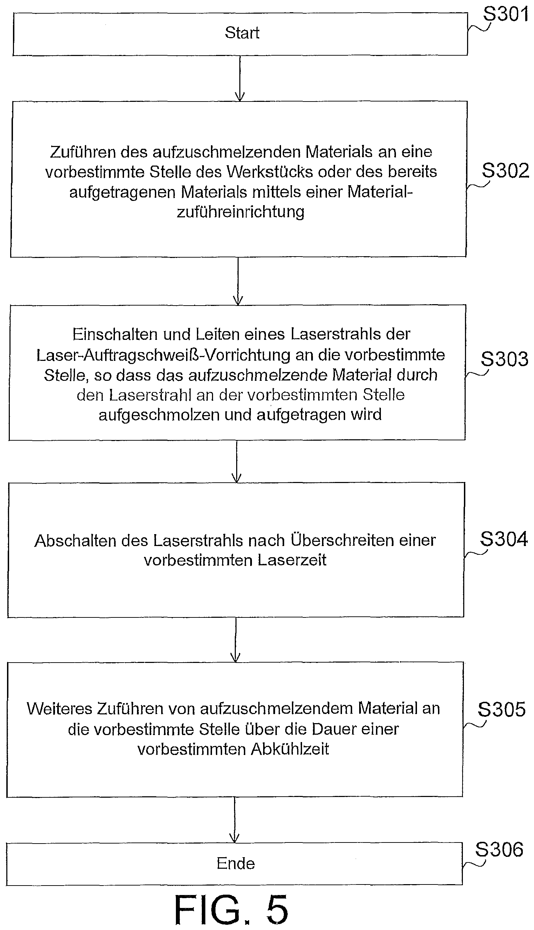

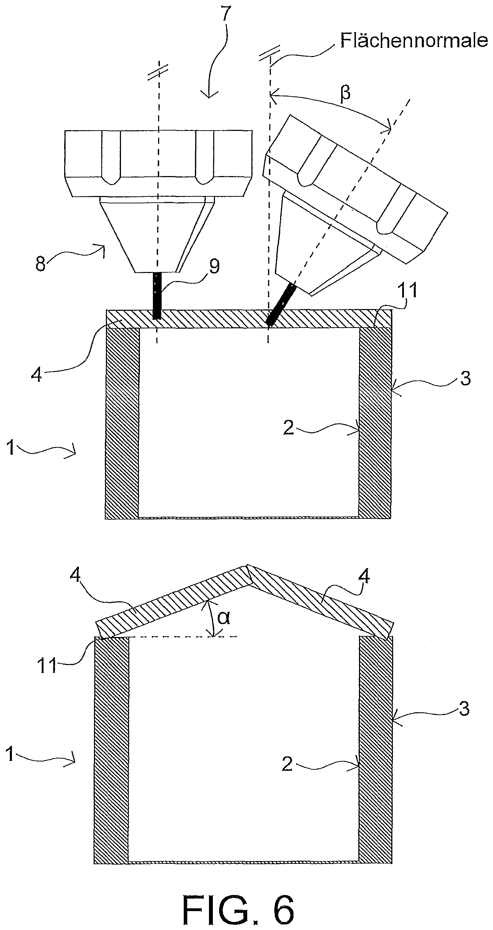

Fig. 5 zeigt ein Ablaufdiagramm eines erfindungsgemäßen Verfahrens für das punktweise Auftragen von aufgeschmolzenem Material zum Ausbilden der Tragstruktur 4, wobei das Verfahren im Folgenden unter zusätzlicher Bezugnahme auf die Fig. 6 beschrieben wird.

Fig. 6 zeigt schematisch den Querschnitt eines Werkstücks 1 und einer Tragstruktur 4 mit einem Neigungswinkel α der Tragstruktur gegenüber dem Randabschnitt 11 und einem Anstellwinkel β einer Düse einer Materialzufuhreinrichtung 8 und des Laserstrahls 9.

Für die Ausbildung der Tragstruktur 4 nach einem der erfindungsgemäßen Verfahren wird in Schritt S302 aufzuschmelzendes Material an eine vorbestimmte Stelle an dem Randabschnitt 11 des Werkstücks 1 oder an einer bereits ausgebildeten Tragstruktur 4 mittels einer Materialzufuhreinrichtung 8 zugeführt.

Im darauf folgenden Schritt S303 wird ein Laserstrahl 9 der Laser-Auftragschweiß-Vorrichtung 7 eingeschaltet und zu der vorbestimmten Stelle geleitet. Dies führt dazu, dass das an die vorbestimmte Stelle geführte Material (hier Metallpulver) aufgeschmolzen wird und dadurch an dem Randabschnitt 11 oder an der bereits ausgebildeten Tragstruktur 4 punktförmig aufgetragen wird.

Im nächsten Schritt S304 wird der Laserstrahl 9 nach einer vorbestimmten Laserzeit wieder abgeschaltet, sodass kein weiterer Wärmeeintrag in das bereits aufgeschmolzene Material stattfindet.

Im darauf folgenden Schritt S305 wird weiterhin aufzuschmelzendes Material (hier Metallpulver) an die vorbestimmte Stelle über die Dauer einer vorbestimmten Abkühlzeit geführt, woraufhin das flüssige Metall vergleichsweise zügig abkühlt und erstarrt. Unterstützend für das Abkühlen des geschmolzenen Materials wirkt ein Transportgas, was dazu verwendet wird, das aufzuschmelzende Material an die vorbestimmte Stelle zu transportieren.

Durch das weitere Zuleiten von Metallpulver kann zudem die Oberfläche des aufgetragenen Materials beeinflusst werden..

Mittels dem beschriebenen Verfahren können die Grundstege 41 sowie die Verbindungsstege 42 zu einer freitragenden Tragstruktur 4 ausgebildet werden. Die so ausgebildete Tragstruktur 4 kann dann wiederum vorteilhaft für das Verkleinern oder vollständige Verschließen einer Öffnung einer Werkstückinnenkontur 2 oder für das Auskragen einer Werkstückaußenkontur 3 verwendet werden, ohne dass dabei eine Hilfsstruktur für das Abstützen der in Ausbildung befindlichen Tragstruktur 4 verwendet werden muss.

Für das Ausbilden der Grundstege 41 und der Verbindungsstege 42 kann es je nach Struktur, die für den jeweiligen Anwendungsfall verwendet werden soll, sinnvoll sein, die Materialzufuhreinrichtung 8 sowie den Laserstrahl 9 zum Aufschmelzen des zugeführten Materials in einem vorbestimmten Winkel β anzustellen. Dies können kleinere Winkel β sein im Bereich von ±0° - 10°, oder aber auch größere Anstellwinkel β im Bereich von ±25° bis ±45° oder darüber hinaus.

Ferner können aber auch bauliche Besonderheiten des Werkstücks 1 oder begrenzter Arbeitsraum dazu führen, dass die Lage der Materialzufuhreinrichtung 8 sowie des Laserstrahl 9 der Laser-Auftragschweiß-Vorrichtung 7 zur auszubildenden Struktur (Tragstruktur 4) verändert werden muss. Hierdurch können zum Beispiel Kollisionen mit dem Werkstück 1 selbst oder aber mit in der Nähe befindlichen Begrenzungen des Arbeitsraumes vermieden werden.

Es kann zudem vorteilhaft sein, eine Neigung der Grundstege 41 bezüglich des Randbereiches 11 vorzusehen, derart, dass die Neigung einen sehr kleinen Winkel α von wenigen Grad (z.B. 3° bis 7°) oder einen deutlich größeren Winkel α (z.B. bis zu 60° oder 75°) aufweist. Dies kann bezüglich baulicher Besonderheiten des Werkstücks 1 notwendig sein oder aber aus Gründen z.B. einer verbesserten Stabilität der Tragstruktur 4 von Vorteil sein. Dabei ist die Ausgestaltung der Grundstege 41 gegenüber dem Randbereich 11 nicht auf positive Winkel α (wie in Fig. 6 dargestellt) beschränkt, sondern kann auch negative Winkel α aufweisen, sodass die Grundstege 41 in einen Bereich der Innenkontur 2 hinein ausgebildet werden.

Vorstehend wurden Beispiele bzw. Ausführungsbeispiele der vorliegenden Erfindung sowie deren Vorteile detailliert unter Bezugnahme auf die beigefügten Figuren beschrieben.

### LISTE DER BEZUGSZEICHEN

- 1: Werkstück
- 2: Innenkontur des Werkstücks
- 3: Außenkontur des Werkstücks
- 4: Tragstruktur
- 5: Abdeckschicht
- 6: Kragschicht
- 7: Laser-Auftragschweiß-Vorrichtung
- 8: Materialzufuhreinrichtung
- 9: Laserstrahl
- 11: Randabschnitt
- 41: Grundsteg
- 42: Verbindungssteg
- α: Neigungswinkel
- β: Anstellwinkel

## Patentansprüche

1. Verfahren zum Verkleinern oder vollständigen Verschließen einer Öffnung einer Werkstückinnenkontur (2) mittels eines durch eine Laser-Auftragschweiß-Vorrichtung (7) aufgeschmolzenen Materials, mit den Schritten:
- Bereitstellen eines Werkstücks (1) mit einer Innenkontur (2), die eine Öffnung aufweist, die durch einen Randabschnitt (11) begrenzt wird,
**gekennzeichnet durch**:
- Ausbilden einer Mehrzahl an Grundstegen (41) aus aufgeschmolzenem Material mittels Laser-Auftragschweißen beginnend an dem Randabschnitt (11) der Werkstückinnenkontur (2), derart, dass die ausgebildeten Grundstege (41) unter einem vorbestimmten Winkel von dem Randabschnitt (11) abstehen,
- Verbinden von benachbarten Grundstegen (41) durch Ausbilden von Verbindungsstegen (42) aus aufgeschmolzenem Material mittels Laser-Auftragschweißen, derart, dass eine aus Grundstegen (41) und Verbindungsstegen (42) bestehende Tragstruktur (4) ausgebildet wird,
- Ausbilden einer mit der Tragstruktur (4) verbundenen Abdeckschicht (5) aus aufgeschmolzenem Material, derart, dass die Öffnung der Innenkontur (2) verkleinert oder vollständig verschlossen wird.

2. Verfahren zum Auskragen einer Werkstückaußenkontur (3) mittels eines durch eine Laser-Auftragschweiß-Vorrichtung (7) aufgeschmolzenen Materials, mit den Schritten:
- Bereitstellen eines Werkstücks (1) mit einer Außenkontur (3), die durch einen Randabschnitt (11) begrenzt wird,
**gekennzeichnet durch**:
- Ausbilden einer Mehrzahl an Grundstegen (41) aus aufgeschmolzenem Material mittels Laser-Auftragschweißen beginnend an dem Randabschnitt (11) der Werkstückaußenkontur (3), derart, dass die ausgebildeten Grundstege (41) unter einem vorbestimmten Winkel von dem Randabschnitt (11) abstehen,
- Verbinden von benachbarten Grundstegen (41) durch Ausbilden von Verbindungsstegen (42) aus aufgeschmolzenem Material mittels Laser-Auftragschweißen, derart, dass eine aus Grundstegen (41) und Verbindungsstegen (42) bestehende Tragstruktur (4) ausgebildet wird,
- Ausbilden einer mit der Tragstruktur (4) verbundenen Kragschicht (6) aus aufgeschmolzenem Material, derart, dass die Außenkontur (3) des Werkstücks (1) ausgekragt wird.

3. Verfahren nach Anspruch 1 oder 2, **dadurch gekennzeichnet, dass**
die Abdeckschicht (5) oder Kragschicht (6) durch Ausfüllen von Freiräumen der Tragstruktur (4) mit aufgeschmolzenem Material ausgebildet wird.

4. Verfahren nach Anspruch 1 oder 2, **dadurch gekennzeichnet, dass**
die Abdeckschicht (5) oder Kragschicht (6) durch Aufbringen einer zusätzlichen Schicht aus aufgeschmolzenem Material auf die Tragstruktur (4) ausgebildet wird.

5. Verfahren nach einem der Ansprüche 1 bis 4, **dadurch gekennzeichnet, dass**
die Grundstege (41) und/oder die Verbindungsstege (42) der Tragstruktur (4) durch punktweises Auftragen von aufgeschmolzenem Material entsprechend der folgenden Schritte ausgebildet werden:
- Zuführen des aufzuschmelzenden Materials mittels einer Materialzufuhreinrichtung (8) an eine vorbestimmte Stelle des Werkstücks (1) oder an eine vorbestimmte Stelle des bereits aufgetragenen Materials,
- Einschalten und Leiten eines Laserstrahls (9) der Laser-Auftragschweiß-Vorrichtung (7) an die vorbestimmte Stelle, sodass das aufzuschmelzende Material durch den Laserstrahl (9) an der vorbestimmten Stelle aufgeschmolzen und aufgetragen wird,
- Abschalten des Laserstrahls (9) nach Überschreiten einer vorbestimmten Laserzeit,
- Weiteres Zuführen von aufzuschmelzendem Material an die vorbestimmte Stelle über die Dauer einer vorbestimmten Abkühlzeit.

6. Verfahren nach Anspruch 5, **dadurch gekennzeichnet, dass**
eine Mehrzahl der Grundstege (41) und eine Mehrzahl der Verbindungsstege (42) so angeordnet sind, dass die Verbindungsstege (42) jeweils die benachbarten Grundstege (41) miteinander verbinden und dass die Grundstege (41) und die Verbindungsstege (42) zusammen eine gitterförmige Struktur ausbilden.

7. Verfahren nach Anspruch 5, **dadurch gekennzeichnet, dass**
die Grundstege (41) und Verbindungsstege (42) zusammen eine spinnennetzförmige Struktur, eine schachbrettförmige Struktur oder eine wabenförmige Struktur bilden.

8. Verfahren nach einem der Ansprüche 5 bis 7, **dadurch gekennzeichnet, dass**
der Laserstrahl (9) einen Durchmesser von 1 mm bis 5 mm, bevorzugt von 2 mm bis 4 mm und besonders bevorzugt von 2,5 mm bis 3,5 mm aufweist.

9. Verfahren nach einem der Ansprüche 5 bis 8, **dadurch gekennzeichnet, dass**
die Laserzeit zwischen 0,2 und 2 Sekunden, bevorzugt zwischen 0,5 und 1,5 Sekunden, und besonders bevorzugt 1 Sekunde beträgt.

10. Verfahren nach einem der Ansprüche 5 bis 9, **dadurch gekennzeichnet, dass**
bei dem Ausbilden von Grundstegen (41) und/oder Verbindungsstegen (42) der Tragstruktur (4) die Materialzufuhreinrichtung (8) und der Laserstrahl (9) nach einem punktweisen Auftragen von aufgeschmolzenem Material an der vorbestimmten Stelle jeweils um 0,5 mm bis 1,8 mm, bevorzugt um 0,8 mm bis 1,5 mm und besonders bevorzugt um 1 mm bis 1,2 mm an die andere vorbestimmte Stelle des aufgetragenen Materials versetzt werden, um weiteres Material für den jeweiligen Grundsteg (41) und/oder Verbindungssteg (42) der Tragstruktur (4) punktweise aufzutragen.

11. Verfahren nach einem der Ansprüche 5 bis 10, **dadurch gekennzeichnet, dass**
die Abkühlzeit zwischen 1 und 10 Sekunden, bevorzugt zwischen 3 und 8 Sekunden, und besonders bevorzugt zwischen 4 und 6 Sekunden beträgt.

12. Verfahren nach einem der Ansprüche 5 bis 11, **dadurch gekennzeichnet, dass**
die Materialzufuhreinrichtung (8) dazu eingerichtet ist, das aufzuschmelzende Material über eine Düse fokussierend an die vorbestimmten Stellen zu führen.

## Claims

1. A method for reducing or completely closing an opening in a inner contour (2) of a workpiece by means of a material melted by a laser deposition welding device (7), comprising the steps of:
- providing a workpiece (1) with an inner contour (2) having an opening defined by an edge portion (11),
**characterized by**
- forming a plurality of base webs (41) from molten material by means of laser deposition welding by starting at said edge portion (11) of said inner contour (2) of the workpiece such that the formed base webs (41) protrude from said edge portion (11) at a predetermined angle,
- joining adjacent base webs (41) by forming base webs (42) from molten material by means of laser deposition welding in such a way that a support structure (4) comprising base webs (41) and connecting webs (42) is formed,
- forming a cover layer (5) which is made of molten material and is connected to said support structure (4) such that the opening of the inner contour (2) is reduced or completely closed.

2. A method for projecting a workpiece outer contour (2) by means of a material melted by a laser deposition welding device (7), comprising the steps of:
- providing a workpiece (1) with an outer contour (3) defined by an edge portion (11),
**characterized by**
- forming a plurality of base webs (41) from molten material by means of laser deposition welding by starting at said edge portion (11) of said workpiece outer contour (3) such that the formed base webs (41) protrude from said edge portion (11) at a predetermined angle,
- connecting adjacent base webs (41) by forming connecting webs (42) from molten material by means of laser deposition welding such that a support structure (4) comprising base webs (41) and connecting webs (42) is formed,
- forming a projection layer (6) which is made of molten material and is connected to said support structure (4) such that the outer contour (3) of said workpiece (1) is projected.

3. The method according to claim 1 or 2, **characterized in that**
the cover layer (5) or projection layer (6) is formed by filling free spaces of said support structure (4) with molten material.

4. The method according to claim 1 or 2, **characterized in that**
the cover layer (5) or projection layer (6) is formed by applying an additional layer of molten material to said support structure (4).

5. The method according to one of claims 1 to 4, **characterized in that** the base webs (41) and/or connecting webs (42) of said support structure (4) are formed by dot-wise application of molten material according to the steps of:
- supplying the material to be melted by means of a material supply apparatus (8) to a predetermined location of said workpiece (1) or to a predetermined location of the material already applied,
- switching on and directing a laser beam (9) of said laser deposition welding device (7) to the predetermined location so that the material to be melted is melted and deposited by said laser beam (9) at the predetermined location,
- switching off said laser beam (9) after exceeding a predetermined laser time,
- further supplying material to be melted to the predetermined location for the duration of a predetermined cooling time.

6. The method according to claim 5, **characterized in that**
a plurality of the base webs (41) and a plurality of the connecting webs (42) are arranged in such a way that the connecting webs (42) each connect the adjacent base webs (41) to one another and that the base webs (41) and the connecting webs (42) together form a grid-like structure.

7. The method according to claim 5, **characterized in that**
the base webs (41) and the connecting webs (42) together form a spidernet-like structure, a checkered structure or a honeycombed structure.

8. The method according to one of claims 5 to 7, **characterized in that**
said laser beam (9) has a diameter from 1 mm to 5 mm, preferably from 2 mm to 4 mm and more preferably from 2.5 mm to 3.5 mm.

9. The method according to one of claims 5 to 8, **characterized in that**
the laser time is between 0.2 and 2 seconds, preferably between 0.5 and 1.5 seconds, and more preferably 1 second.

10. The method according to one of claims 5 to 9, **characterized in that**
during the formation of base webs (41) and/or connecting webs (42) of said support structure (4), said material supply device (8) and said laser beam (9) are each displaced by 0.5 mm to 1.8 mm, preferably by 0.8 mm to 1.5 mm and more preferably by 1 mm to 1.2 mm, to the other predetermined location of the applied material after a dot-wise application of molten material at the predetermined location in order to apply further material for the respective base web (41) and/or connecting web (42) of said support structure (4) in a dot-wise manner.

11. The method according to one of claims 5 to 10, **characterized in that**
the cooling time is between 1 and 10 seconds, preferably between 3 and 8 seconds, and more preferably between 4 and 6 seconds.

12. The method according to one of claims 5 to 11, **characterized in that**
said material supply apparatus (8) is configured to direct the material to be melted via a nozzle to the predetermined locations in a focusing way.

## Revendications

1. Procédé de réduction ou de fermeture complète d'une ouverture d'un contour intérieur de pièce à usiner (2) au moyen d'un matériau fondu par un dispositif de soudage par superposition au laser (7), avec les étapes consistant à :
- mettre à disposition une pièce à usiner (1) avec un contour intérieur (2) qui présente une ouverture qui est délimitée par une partie de bord (11),
**caractérisé par** le fait de :
- former une pluralité de barrettes de base (41) en matériau fondu au moyen d'un soudage par superposition au laser commençant contre la partie de bord (11) du contour intérieur de pièce à usiner (2), de sorte que les barrettes de base (41) formées soient éloignées de la partie de bord (11) selon un angle prédéfini,
- relier des barrettes de base (41) avoisinantes en formant des barrettes de liaison (42) en matériau fondu au moyen d'un soudage par superposition au laser, de telle sorte qu'une structure porteuse (4) constituée de barrettes de base (41) et de barrettes de liaison (42) soit formée,
- former une couche de couverture (5) en matériau fondu reliée à la structure porteuse (4), de telle sorte que l'ouverture du contour intérieur (2) soit réduite ou complètement fermée.

2. Procédé de mise en saillie d'un contour extérieur de pièce à usiner (3) au moyen d'un matériau fondu par un dispositif de soudage par superposition au laser (7), avec les étapes consistant à :
- mettre à disposition une pièce à usiner (1) avec un contour extérieur (3) qui est délimité par une partie de bord (11),
**caractérisé par** le fait de :
- former une pluralité de barrettes de base (41) en matériau fondu au moyen d'un soudage par superposition au laser commençant contre la partie de bord (11) du contour extérieur de pièce à usiner (3), de sorte que les barrettes de base (41) formées soient éloignées de la partie de bord (11) selon un angle prédéfini,
- relier des barrettes de base (41) avoisinantes en formant des barrettes de liaison (42) en matériau fondu au moyen d'un soudage par superposition au laser, de telle sorte qu'une structure porteuse (4) constituée de barrettes de base (41) et de barrettes de liaison (42) soit formée,
- former une couche de col (6) en matériau fondu reliée à la structure porteuse (4), de telle sorte que le contour extérieur (3) de la pièce à usiner (1) soit mis en saillie.

3. Procédé selon la revendication 1 ou 2, **caractérisé en ce que**
la couche de couverture (5) ou la couche de col (6) est formée en remplissant des espaces libres de la structure porteuse (4) avec du matériau fondu.

4. Procédé selon la revendication 1 ou 2, **caractérisé en ce que**
la couche de couverture (5) ou la couche de col (6) est formée en appliquant une couche supplémentaire en matériau fondu sur la structure porteuse (4).

5. Procédé selon l'une des revendications 1 à 4, **caractérisé en ce que**
les barrettes de base (41) et/ou les barrettes de liaison (42) de la structure porteuse (4) sont formées en appliquant ponctuellement un matériau fondu selon les étapes suivantes consistant à :
- amener le matériau à fondre au moyen d'un équipement d'amenée de matériau (8) contre un emplacement prédéfini de la pièce à usiner (1) ou contre un emplacement prédéfini du matériau déjà appliqué,
- allumer et guider un faisceau laser (9) du dispositif de soudage par superposition au laser (7) contre l'emplacement prédéfini, de sorte que le matériau à fondre puisse être fondu et appliqué contre l'emplacement prédéfini par le faisceau laser (9),
- éteindre le faisceau laser (9) après dépassement d'un temps de laser prédéfini,
- amener à nouveau un matériau à fondre contre l'emplacement prédéfini à l'issue de la durée d'un temps de refroidissement prédéfini.

6. Procédé selon la revendication 5, **caractérisé en ce que**
une pluralité des barrettes de base (41) et une pluralité des barrettes de liaison (42) sont agencées de telle sorte que les barrettes de liaison (42) relient respectivement ensemble les barrettes de base (41) et **en ce que** les barrettes de base (41) et les barrettes de liaison (42) forment ensemble une structure en forme de grille.

7. Procédé selon la revendication 5, **caractérisé en ce que**
les barrettes de base (41) et les barrettes de liaison (42) forment ensemble une structure en forme de toile d'araignée, une structure en forme d'échiquier ou une structure en forme de nid d'abeilles.

8. Procédé selon l'une des revendications 5 à 7, **caractérisé en ce que**
le faisceau laser (9) présente un diamètre de 1 mm à 5 mm, de préférence de 2 mm à 4 mm, et particulièrement de préférence de 2,5 mm à 3,5 mm.

9. Procédé selon l'une des revendications 5 à 8, **caractérisé en ce que**
le temps de laser s'élève à entre 0,2 et 2 secondes, de préférence à entre 0,5 et 1,5 seconde, et particulièrement de préférence à 1 seconde.

10. Procédé selon l'une des revendications 5 à 9, **caractérisé en ce que**
lors de la formation de barrettes de base (41) et/ou de barrettes de liaison (42) de la structure porteuse (4), l'équipement d'amenée de matériau (8) et le faisceau laser (9) sont, après une application ponctuelle d'un matériau fondu contre l'emplacement prédéfini, respectivement décalés de 0,5 mm à 1,8 mm, de préférence de 0,8 mm à 1,5 mm, et particulièrement de préférence de 1 mm à 1,2 mm, contre l'autre emplacement prédéfini du matériau appliqué afin d'appliquer ponctuellement un matériau suivant pour la barrette de base (41) et/ou la barrette de liaison (42) respectives de la structure porteuse (4).

11. Procédé selon l'une des revendications 5 à 10, **caractérisé en ce que**
le temps de refroidissement s'élève à entre 1 et 10 secondes, de préférence entre 3 et 8 secondes, et particulièrement de préférence entre 4 et 6 secondes.

12. Procédé selon l'une des revendications 5 à 11, **caractérisé en ce que**
l'équipement d'amenée de matériau (8) est conçu pour conduire le matériau à fondre contre les emplacements prédéfinis de façon focalisée via une buse.
